# EUROPEAN PATENT SPECIFICATION

(11) **EP 4 499 393 B1**
(45) Date of publication and mention of the grant of the patent: **04.02.2026**
(21) Application number: 22718167.4
(22) Date of filing: 24.03.2022
(51) Int. Cl.: B08B 3/02, B29D 11/00, B08B 3/00, G06K 1/12, G02B 1/10, F04B 43/00, C03C 23/00, B05D 1/00, B05B 17/00, B05B 15/58, B05B 7/04, B05B 9/04, F04B 23/06, F04B 43/02

(54) **OPTICAL ARTICLE COATING SYSTEM**
OPTISCHES ARTIKELBESCHICHTUNGSSYSTEM
SYSTÈME DE REVÊTEMENT D'ARTICLE OPTIQUE

(43) Date of publication of application: 05.02.2025
(73) Proprietor: Transitions Optical, Ltd., Tuam, Co. Galway (IE)
(72) Inventor: MINOR, Lawrence M., Plant City, Florida 33565 (US); BEAMER, Willard, Palmetto, Florida 34221 (US); CICCO, Steven, Flower Mount, TX 75028 (US); PACE, Lex, Largo, Florida 33773 (US); SAPUTERA, Yani, The Colony, Texas 75056 (US); HENDERSON, Kyle, Dallas, TX 75218 (US)
(74) Representative: f & e patent
(86) International application number: PCT/EP2022/057842
(87) International publication number: WO 2023/179864

(56) References cited:
- CH-A- 305 998
- DE-A1- 4 328 382
- US-A1- 2020 384 788
- US-A1- 2021 277 848

## Description

### BACKGROUND OF THE INVENTION

### Field of the Invention

The present invention relates to a coating system for coating an optical article. In particular, the present invention relates to a coating system for coating an optical article having at least one replaceable cartridge having a reservoir configured for containing a volume of a coating material and at least one coating apparatus operable to coat at least a portion of the optical article with a select amount of the coating material from the at least one replaceable cartridge. A method of coating an optical article using a coating system is also disclosed.

### Description of the Related Art

With optical articles, such as lenses, one or more surfaces may be subjected to a treatment to enhance the overall performance and function of the optical articles. Examples of such treatments include the formation of one or more coatings on a surface of an optical article.

In order to manufacture a coated optical article from an uncoated optical article, a variety of manufacturing techniques have been developed. For smaller batches, it may be economical to manufacture coated optical articles by passing a single optical article through a plurality of discrete processing stations, such as a washing station, a coating station, and a curing station, before a subsequent optical article is processed. Small batch coating systems are typically configured for application of a single coating material. In large scale operations, optical articles may be processed on an automated production line configured for processing hundreds of optical articles per hour.

Regardless of the manufacturing scale, it is difficult to quickly switch the production line for the application of different coating materials, such as for different substrates and/or different final products, as generally the coating material reservoir and the coating apparatus must be purged and cleaned to accommodate the change in coating material. An additional difficulty relates to the curing station, which may not be suitable for curing other coating materials.

It would be desirable to develop coating systems that can accommodate a plurality of different coating materials. It would be further desirable that such newly developed coating systems are configured for quick and easy switching between different coating materials.

US 2020/0384788 A1 discloses a coating system for coating an optical substrate with an identification apparatus configured for identifying an orientation of a mark on a surface of the optical substrate, a coating apparatus configured to apply coating material from a reservoir onto the substrate in a predetermined pattern by controlled deposition of the coating material in an atomized droplet form, and a robotic placement arm configured to move the optical substrate from the identification apparatus to the coating apparatus and position the optical substrate at a predetermined orientation relative to the coating apparatus based on the orientation of the mark.

### SUMMARY OF THE INVENTION

According to the present invention, provided is a coating system for coating an optical article that includes at least one replaceable cartridge having a reservoir configured for containing a volume of a coating material, a recirculation loop in fluid communication with the reservoir, and a first pump and a second pump in fluid communication with the recirculation loop. The coating system further includes at least one coating apparatus operable to coat at least a portion of the optical article with a select amount of the coating material from an engaged at least one replaceable cartridge. The second pump of each of the engaged at least one replaceable cartridge is operable to aspirate the select amount of the coating material from the recirculation loop and deliver the select amount of the coating material to the at least one coating apparatus.

In some non-limiting examples or aspects of the present disclosure, the first pump may be a diaphragm pump configured for recirculating the coating from the reservoir through the recirculation loop. The second pump may be a piston pump having housing that includes an inlet having an inlet valve, an outlet having an outlet valve, and a pumping chamber between the inlet valve and the outlet valve. The second pump further may include a piston disposed within the pumping chamber and configured for reciprocal movement within the pumping chamber via a drive member.

In some non-limiting examples or aspects of the present disclosure, the at least one coating apparatus may include a first coating apparatus and a second coating apparatus each selectively operable to coat at least a portion of the optical article with the select amount of the coating material from the engaged at least one coating reservoir. The first coating apparatus may include an ultrasonic discharge nozzle configured for atomizing the select amount of coating material from the engaged at least one coating reservoir. The second coating apparatus may be a spin coating apparatus.

In some non-limiting examples or aspects of the present disclosure, a marking apparatus may be configured for marking at least one surface of the optical article with at least one mark. Furthermore, an identification apparatus configured for identifying an orientation of the at least one mark may be provided. The coating system may include a placement arm configured to move the optical article from the identification apparatus to the at least one coating apparatus and position the optical article at a predetermined orientation relative to at least one coating apparatus based on the orientation of the at least one mark.

In some non-limiting examples or aspects of the present disclosure, the coating system may include a pre-treatment station, wherein the pre-treatment station is configured for raising wettability of the optical article to promote adhesion of the at least one coating material with the optical article. The coating system further may include a cleaning station a housing having a wash bowl and a lid for enclosing the wash bowl, a spin platform within the wash bowl configured for receiving the optical article, and at least one wash nozzle configured for cleaning at least one surface of the optical article with a pressurized liquid. The bowl may include an air inlet configured for directing air toward the spin platform, an air outlet configured for exhausting the air from the wash bowl, and a diffuser between the air inlet and the air outlet.

In some non-limiting examples or aspects of the present disclosure, the coating apparatus may include at least one curing station, where each curing station is independently configured to at least partially cure the at least one coating material applied to the optical article. Each curing station independently may include at least one of (i) a thermal curing station; (ii) a UV curing station; (iii) an IR curing station; and (iv) combinations of at least two of (i), (ii), and (iii).

In some non-limiting examples or aspects of the present disclosure, the coating apparatus may include a filter in fluid communication with the recirculation loop, wherein the filter is configured for filtering the coating material circulating through the recirculation loop. The coating apparatus may include a de-bubbling system in fluid communication with the recirculation loop, the de-bubbling system configured for removing air bubbles in the coating material circulating through the recirculation loop.

According to the invention, the coating system for coating an optical article has at least one replaceable cartridge comprising a reservoir configured for containing a volume of a coating material, a recirculation loop in fluid communication with the reservoir, and a first pump and a second pump in fluid communication with the recirculation loop; and at least one coating apparatus operable to coat at least a portion of the optical article with a select amount of the coating material from an engaged at least one replaceable cartridge, wherein the second pump of each of the engaged at least one replaceable cartridge is operable to aspirate the select amount of the coating material from the recirculation loop and deliver the select amount of the coating material to the at least one coating apparatus.

In a second aspect, in the coating system in accordance with the first aspect, the first pump is a diaphragm pump configured for recirculating the coating from the reservoir through the recirculation loop.

In a third aspect, in the coating system in accordance with the first aspect or the second aspect, the second pump is a piston pump comprised of a piston disposed within a pumping chamber and configured for reciprocal movement within the pumping chamber via a drive member.

In a fourth aspect, in the coating system in accordance with any one of the first aspect to the third aspect, the at least one coating apparatus comprises a first coating apparatus and a second coating apparatus each selectively operable to coat at least a portion of the optical article with the select amount of the coating material from the engaged at least one coating reservoir.

In a fifth aspect, in the coating system in accordance with the fourth aspect, the first coating apparatus comprises an ultrasonic discharge nozzle configured for atomizing the select amount of coating material from the engaged at least one coating reservoir.

In a sixth aspect, in the coating system in accordance with the fourth aspect or the fifth aspect, the second coating apparatus is a spin coating apparatus.

In a seventh aspect, in the coating system in accordance with any of one of the first aspect to the sixth aspect, provided are a marking apparatus configured for marking at least one surface of the optical article with at least one mark; and an identification apparatus configured for identifying the at least one mark, wherein the at least one mark contains information for processing the optical article in the coating system.

In an eighth aspect, in the coating system in accordance with the seventh aspect, provided is a placement arm configured to move the optical article from the identification apparatus to the at least one coating apparatus and position the optical article at a predetermined orientation relative to at least one coating apparatus based on the at least one mark.

In a ninth aspect, in the coating system in accordance with any one of the first aspect to the eighth aspect, provided is a pre-treatment station, wherein the pre-treatment station is configured for raising wettability of the optical article to promote adhesion of the at least one coating material with the optical article.

In a tenth aspect, in the coating system in accordance with any one of the first aspect to the ninth aspect, provided is a cleaning station comprising: a housing having a wash bowl and a lid for enclosing the wash bowl; a spin platform within the wash bowl configured for receiving the optical article; and at least one wash nozzle configured for cleaning at least one surface of the optical article with a pressurized liquid.

In an eleventh aspect, in the coating system in accordance with the tenth aspect, the wash bowl comprises an air inlet configured for directing air toward the spin platform, an air outlet configured for exhausting the air from the wash bowl, and a diffuser between the air inlet and the air outlet.

In a twelfth aspect, in the coating system in accordance with any one of the first aspect to the eleventh aspect, provided is at least one curing station, where each curing station is independently configured to at least partially cure the at least one coating material applied to the optical article.

In a thirteenth aspect, in the coating system in accordance with the twelfth aspect, each curing station independently comprises at least one of (i) a thermal curing station; (ii) a UV curing station; (iii) an IR curing station; and (iv) combinations of at least two of (i), (ii), and (iii).

In a fourteenth aspect, in the coating system in accordance with any one of the first aspect to the thirteenth aspect, provided is a filter in fluid communication with the recirculation loop, wherein the filter is configured for filtering the coating material circulating through the recirculation loop.

In a fifteenth aspect, in the coating system in accordance with any one of the first aspect to the fourteenth aspect, provided is a de-bubbling system in fluid communication with the recirculation loop, the de-bubbling system configured for removing air bubbles in the coating material circulating through the recirculation loop.

The features that characterize the present invention are pointed out with particularity in the claims, which are annexed to and form a part of this disclosure. These and other features of the invention, its operating advantages, and the specific objects obtained by its use will be more fully understood from the following detailed description in which non-limiting examples of the invention are illustrated and described.

### BRIEF DESCRIPTION OF THE DRAWINGS

**FIG. 1** is a representative schematic view of a coating system in accordance with some examples of the present disclosure;
**FIG. 2** is a representative perspective view of an optical article;
**FIG. 3** is a representative perspective view of a washing and drying apparatus in accordance with some examples of the present disclosure;
**FIG. 4** is a side cross-sectional view of the washing and drying apparatus shown in **FIG. 3****;**
**FIG. 5A** is a detailed view of a nozzle of the washing and drying apparatus shown in **FIG. 3****;**
**FIG. 5B** is a detailed view of a brush of the washing and drying apparatus shown in FIG. 3;
**FIG. 6** is a side cross-sectional view of a first coating apparatus in accordance with some examples of the present disclosure;
**FIG. 7** is a side cross-sectional view of a second coating apparatus in accordance with some examples of the present disclosure;
**FIG. 8** is a representative schematic view of a coating material storage system for use with the coating system of **FIG. 1****;**
**FIG. 9** is a perspective view of a replaceable cartridge configured for use with the coating material storage system of **FIG. 8****;**
**FIG. 10** is a perspective view of a first pump of the replaceable cartridge shown in **FIG. 9****;**
**FIG. 11** is a perspective cross-sectional view of the first pump shown in **FIG. 10****;**
**FIG. 12** is a side cross-sectional view of a second pump of the replaceable cartridge shown in **FIG. 9****;** and
**FIG. 13** is a side cross-sectional view of a curing apparatus in accordance with some examples of the present disclosure.

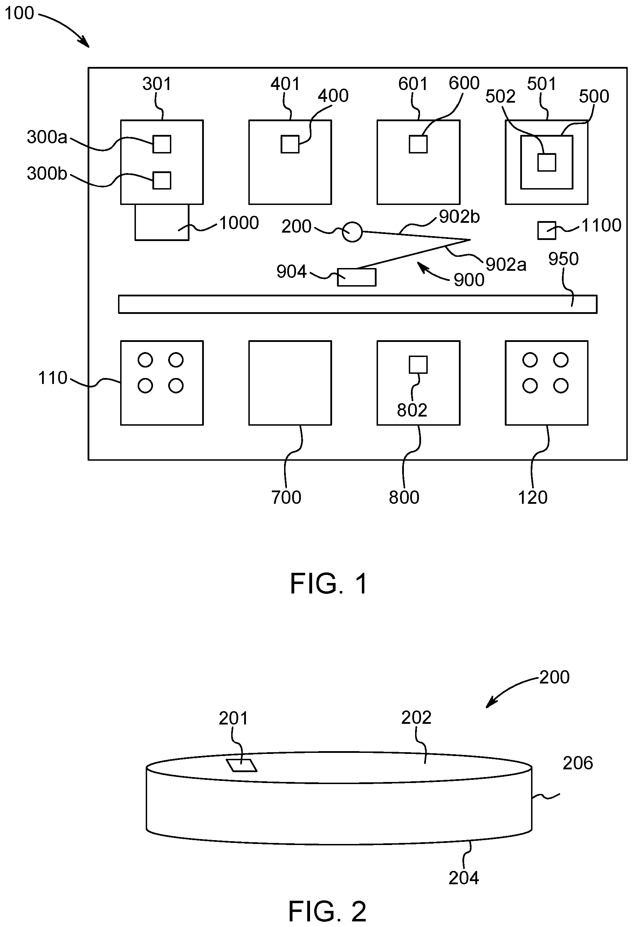

In **FIGS. 1-13****,** like characters refer to the same components and elements, as the case may be, unless otherwise stated.

### DETAILED DESCRIPTION OF THE INVENTION

As used herein, the singular form of "a", "an", and "the" include plural referents unless the context clearly dictates otherwise.

Spatial or directional terms, such as "left", "right", "inner", "outer", "above", "below", and the like, relate to the invention as shown in the drawing figures and are not to be considered as limiting as the invention can assume various alternative orientations.

All numbers used in the specification and claims are to be understood as being modified in all instances by the term "about". By "about" is meant plus or minus twenty-five percent of the stated value, such as plus or minus ten percent of the stated value. However, this should not be considered as limiting to any analysis of the values under the doctrine of equivalents.

Unless otherwise indicated, all ranges or ratios disclosed herein are to be understood to encompass the beginning and ending values and any and all subranges or subratios subsumed therein. For example, a stated range or ratio of "1 to 10" should be considered to include any and all subranges or subratios between (and inclusive of) the minimum value of 1 and the maximum value of 10; that is, all subranges or subratios beginning with a minimum value of 1 or more and ending with a maximum value of 10 or less. The ranges and/or ratios disclosed herein represent the average values over the specified range and/or ratio.

The terms "first", "second", and the like are not intended to refer to any particular order or chronology, but refer to different conditions, properties, or elements.

The term "at least" is synonymous with "greater than or equal to".

The term "not greater than" is synonymous with "less than or equal to".

As used herein, "at least one of" is synonymous with "one or more of". For example, the phrase "at least one of A, B, or C" means any one of A, B, or C, or any combination of any two or more of A, B, or C. For example, "at least one of A, B, or C" includes A alone; or B alone; or C alone; or A and B; or A and C; or B and C; or all of A, B, and C.

The term "adjacent" means proximate to but not in direct contact with.

The term "includes" is synonymous with "comprises".

As used herein, the terms "parallel" or "substantially parallel" mean a relative angle as between two objects (if extended to theoretical intersection), such as elongated objects and including reference lines, that is from 0° to 5°, or from 0° to 3°, or from 0° to 2°, or from 0° to 1°, or from 0° to 0.5°, or from 0° to 0.25°, or from 0° to 0.1°, inclusive of the recited values.

As used herein, the terms "perpendicular" or "substantially perpendicular" mean a relative angle as between two objects at their real or theoretical intersection is from 85° to 90°, or from 87° to 90°, or from 88° to 90°, or from 89° to 90°, or from 89.5° to 90°, or from 89.75° to 90°, or from 89.9° to 90°, inclusive of the recited values.

The term "optical" means pertaining to or associated with light and/or vision. For example, an optical element, article, or device can be chosen from ophthalmic elements, articles, and devices; display elements, articles, and devices; visors; windows; and mirrors.

The term "ophthalmic" means pertaining to or associated with the eye and vision. Non-limiting examples of ophthalmic articles or elements include corrective and non-corrective lenses, including single vision or multi-vision lenses, which may be either segmented or non-segmented multi-vision lenses (such as, but not limited to, bifocal lenses, trifocal lenses, and progressive lenses), as well as other elements used to correct, protect, or enhance (cosmetically or otherwise) vision, including without limitation, contact lenses, intra-ocular lenses, magnifying lenses, and protective lenses or visors.

As used herein, the terms "lens" and "lenses" mean and encompass at least individual lenses, lens pairs, partially formed (or semi-finished) lenses, fully formed (or finished) lenses, and lens blanks.

As used herein, the term "transparent", such as used in connection with a substrate, film, material, and/or coating, means that the indicated substrate, film, material, and/or coating has the property of transmitting visible light without appreciable scattering so that objects lying beyond are visibly observable.

As used herein, the terms "ultraviolet", "UV", "ultraviolet light", or "ultraviolet radiation" mean electromagnetic radiation having a wavelength in the range of 10 nm to 400 nm.

As used herein, the terms "infrared", "IR", "infrared light", or "infrared radiation" mean electromagnetic radiation having a wavelength in the range of 780 nm to 1 mm.

As used herein, the term "ultrasonic" refers to one or more sound waves having a frequency higher than approximately 20,000 Hz (20 kHz).

As used herein, the term "coating" means a supported film derived from a flowable coating material, which can optionally have a uniform thickness, and specifically excludes polymeric sheets. The terms "layer" and "film" each encompass both coatings (such as a coating layer or a coating film) and sheets, and a layer can include a combination of separate layers, including sub-layers and/or over-layers. The verb "coating" means, within appropriate context, the process of applying a coating material (or materials) to the substrate to form a coating (or coating layer).

As used herein, the terms "cure", "cured", and related terms, mean that at least a portion of the polymerizable and/or crosslinkable components that form a curable composition are at least partially polymerized and/or crosslinked. In accordance with some examples, the degree of crosslinking can range from 5% to 100% of complete crosslinking. In accordance with some further examples, the degree of crosslinking can range from 30% to 95%, such as 35% to 95%, or 50% to 95%, or 50% to 85% of complete crosslinking. The degree of crosslinking can range between any combination of these recited lower and upper values, inclusive of the recited values.

As used herein, the terms "communication" and "communicate" may refer to the reception, receipt, transmission, transfer, provision, and/or the like, of information (e.g., data, signals, messages, instructions, commands, and/or the like).

As used herein, a "graphical user interface" or "GUI" refers to a generated display with which a user may interact, either directly or indirectly (e.g., through a button, keyboard, mouse, touchscreen etc.).

The discussion of the invention may describe certain features as being "particularly" or "preferably" within certain limitations (e.g., "preferably", "more preferably", or "even more preferably", within certain limitations). It is to be understood that the invention is not limited to these particular or preferred limitations but encompasses the entire scope of the disclosure.

The invention comprises, consists of, or consists essentially of the following examples of the invention, in any combination. Various examples of the invention may be discussed separately. However, it is to be understood that this is simply for ease of illustration and discussion. In the practice of the invention, one or more aspects of the invention described in one example can be combined with one or more aspects of the invention described in one or more of the other examples.

With reference to **FIG. 1****,** a coating system **100** is shown in accordance with some examples or aspects of the present disclosure. The coating system **100,** as described herein, and in accordance with some examples, provides a low cost, small scale coating system configured for applying one or more coating materials to an optical article **200.** The coating system **100** can include a surface pretreatment station (such as, but not limited to, a plasma pretreatment station), a washing/drying station, one or more coating apparatuses (utilizing one or more of multiple coatings and combinations of coatings), and one or more curing apparatuses (such as UV, IR, and/or thermal curing apparatuses) or combinations thereof. The coating system **100** of the present invention can, with some examples, be operated with the formation of minimal waste streams and/or waste materials.

The coating system **100** of the present disclosure can, with some examples, be used for the production of optical articles **200,** which each independently have the same or different coating materials applied thereon. In some examples, the coating system **100** of the present disclosure can be at least partially automated and optionally incorporated into art-recognized product tracking and control systems.

With reference to **FIG. 1****,** the coating system **100** generally has a plurality of stations, each having an apparatus configured for performing a specified task. For example, the coating system **100** may have a coating station **301** having at least one coating apparatus **300** for coating the optical article **200** and a curing station **401** having at least one curing apparatus **400** for curing the coated optical article **200.** Optionally, the coating system **100** has a pre-treatment station **500,** and/or a washing and drying station **600.** In some examples or aspects, the coating system **100** may have a marking station **700** configured for marking at least one mark on the optical article **200** and an inspection station **800** configured for determining at least one characteristic of the at least one mark on the optical article **200.** A placement arm **900** may be provided for moving the optical article **200** between various stations of the coating system **100.** In some examples or aspects, a conveyor belt **950** may be provided for moving the optical articles **200** between different stations of the coating system **100** or within any single station of the coating system **100.**

With continued reference to **FIG. 1****,** the coating system **100** may have a loading station **110** having a plurality of blank optical articles **200** that are to be processed through the coating system **100.** The coating system **100** further may include an unloading station **120** configured for storing one or more coated optical articles **200** after the one or more optical articles **200** have been processed through the coating system **100.**

The coating system **100** can, with some examples or aspects, be used to coat a variety of articles, such as, but not limited to, optical articles **200.** With reference to **FIG. 2****,** the optical article **200** has a forward or top surface **202,** a rearward or bottom surface **204,** and a side surface **206** extending between the top surface **202** and the bottom surface **204.** When the optical article **200** is an ophthalmic lens, the bottom surface **204** is opposed to the eye of an individual wearing the optical article **200,** the side surface **206** typically resides within a supportive frame, and the top surface **2202** faces incident light (not shown), at least a portion of which passes through the optical article **200** and into the individual's eye. With some examples or aspects, at least one of the top surface **202,** the bottom surface **204,** and the side surface **206** may have various shapes including, but not limited to, round, flat, cylindrical, spherical, planar, substantially planar, plano-concave and/or plano-convex, and curved, including, but not limited to, convex, and/or concave.

The optical article **200** that is coated with the system and method of the present disclosure can, with some examples, be formed from and correspondingly include organic materials, inorganic materials, or combinations thereof (for example, composite materials).

Examples of organic materials that can be used as optical articles **200** in accordance with various examples of the present invention, include polymeric materials, such as homopolymers and copolymers, prepared from the monomers and mixtures of monomers disclosed in U.S. Patent No. 5,962,617 and in U.S. Patent No. 5,658,501 from column 15, line 28 to column 16, line 17. For example, such polymeric materials can be thermoplastic or thermoset polymeric materials, can be transparent or optically clear, and can have any refractive index required. Examples of such monomers and polymers include: polyol(allyl carbonate) monomers, e.g., allyl diglycol carbonates such as diethylene glycol bis(allyl carbonate), which monomer is sold under the trademark CR-39 by PPG Industries, Inc.; polyurea-polyurethane (polyurea-urethane) polymers, which are prepared, for example, by the reaction of a polyurethane prepolymer and a diamine curing agent, a composition for one such polymer being sold under the trademark TRIVEX by PPG Industries, Inc.; polyol(meth)acryloyl terminated carbonate monomer; diethylene glycol dimethacrylate monomers; ethoxylated phenol methacrylate monomers; diisopropenyl benzene monomers; ethoxylated trimethylol propane triacrylate monomers; ethylene glycol bismethacrylate monomers; poly(ethylene glycol) bismethacrylate monomers; urethane acrylate monomers; poly(ethoxylated bisphenol A dimethacrylate); poly(vinyl acetate); poly(vinyl alcohol); poly(vinyl chloride); poly(vinylidene chloride); polyethylene; polypropylene; polyurethanes; polythiourethanes; thermoplastic polycarbonates, such as the carbonate-linked resin derived from bisphenol A and phosgene, one such material being sold under the trademark LEXAN; polyesters, such as the material sold under the trademark MYLAR; poly(ethylene terephthalate); polyvinyl butyral; poly(methyl methacrylate), such as the material sold under the trademark PLEXIGLAS, and polymers prepared by reacting polyfunctional isocyanates with polythiols or polyepisulfide monomers, either homopolymerized or co-and/or terpolymerized with polythiols, polyisocyanates, and polyisothiocyanates; and optionally ethylenically unsaturated monomers or halogenated aromatic-containing vinyl monomers. Also contemplated are copolymers of such monomers and blends of the described polymers and copolymers with other polymers, for example, to form block copolymers or interpenetrating network products.

With some examples of the present invention, the optical article **200** can be an ophthalmic article. Examples of organic materials suitable for use in forming ophthalmic articles include art-recognized polymers that are useful as ophthalmic articles, such as organic optical resins that are used to prepare optically clear castings for optical applications, such as ophthalmic lenses.

Examples of inorganic materials that can be used as optical articles **200** with some examples of the present invention include glasses, minerals, ceramics, and metals. With some examples, the optical article **200** can include glass. In other examples, the optical article **200** can have a reflective surface, for example, a polished ceramic substrate, metal substrate, or mineral substrate. In other examples, a reflective coating or layer (e.g., a metal layer, such as a silver layer) can be deposited or otherwise applied to a surface of an inorganic or an organic substrate to make it reflective or to enhance its reflectivity.

Optical articles **200** that can be used with the method according to some examples of the present disclosure can also include untinted, tinted, linearly polarizing, circularly polarizing, elliptically polarizing, photochromic, or tinted-photochromic substrates. As used herein with reference to optical articles **200,** the term "untinted" means optical articles that are essentially free of coloring agent additions (such as conventional dyes) and have an absorption spectrum for visible radiation that does not vary significantly in response to actinic radiation. Further, with reference to optical articles **200,** the term "tinted" means substrates that have a coloring agent addition (such as conventional dyes) and an absorption spectrum for visible radiation that does not vary significantly in response to actinic radiation.

With continued reference to **FIG. 2****,** at least one indicia, such as at least one mark **210,** may be provided on the optical article **200.** In some examples or aspects, the at least one mark **210** may be used by the coating system **100** to determine the process flow and process settings that the optical article **200** will undergo in the coating system **100.** For example, the at least one mark **210** may define a "recipe" for various treatment steps that the optical article **200** will undergo in the coating system **200.** In some examples or aspects, each optical article **200** may have a unique mark **210** that identifies the process flow and process settings that the optical article **200** will undergo in the coating system **100.** The use of the at least one mark **210** allows for product tracking within the coating system **100,** as well as quality control after the optical articles **200** have been processed through the coating system **100.**

In some examples or aspects, the at least one mark **210** may be used to determine an orientation of the optical article **200** relative to at least one component of the coating system **100.** In some examples, the at least one mark **210** may be a pair of marks **210** used to identify a location/orientation of at least one characteristic of the optical article **200,** such as the progressiveness of the optical article **200** (i.e., location of a smooth transition between parts of the optical article **200** with different focal lengths). Such positioning relative to the coating apparatus is important when applying gradient coatings to the optical article **200.** When a gradient coating is applied to a progressive optical article **200,** special care must be taken to orient the gradient coating relative to the location of different focal lengths of the optical article **200.**

With continued reference to **FIG. 2****,** the at least one mark **210** may be provided on any surface of the optical article **200,** such as the top surface **202** the bottom surface **204,** and/or the side surface **206.** In some examples, the at least one mark **210** is formed as a topographical feature that may protrude from the exterior surface of the optical article **200,** or a topographical feature that is recessed into the exterior surface of the optical article **200.** In some examples, the at least one mark **210** may be formed on the optical article **200** by etching, engraving, or according to other methods known by those skilled in the field to imprint the desired at least one mark **210** on the optical article **200.** In some examples, the at least one mark **210** is in the form of a one-dimensional barcode and/or a two dimensional barcode.

In some examples, the at least one mark **210** may be applied to at least one surface of the optical article **200.** For example, the at least one mark **210** may be adhesively applied, printed, written, or otherwise applied to the at least one surface of the optical article **200.** In some examples, the at least one mark **210** may be provided on a carrier that is separate from the optical article **200.** The carrier may be removably or non-removably applied to at least one surface of the optical article **200.**

With reference to **FIG. 1****,** the coating system **100** may have a marking apparatus **700** configured for marking at least one surface of the optical article **200** with the at least one mark **210** (shown in **FIG. 2****).** In some examples or aspects, the marking apparatus **700** may be an engraving apparatus, such as a laser engraving apparatus, configured for marking at least one surface of the optical article **200** with the at least one mark **210.** In other examples or aspects, the marking apparatus **700** may be a printer configured for printing a label having the at least one mark **210** which can be adhesively applied to the optical article **200.** In some examples or aspects, the marking apparatus **700** that is configured as a printer may be configured for printing the at least one mark **210** directly on at least one surface of the optical article **200.** Operation of the marking apparatus **700** may be controlled by a controller, as described hereinafter.

With continued reference to **FIG. 1****,** the coating system **100** has an inspection apparatus **800** configured for identifying the at least one mark **210** (shown in **FIG. 2****)** on the optical article **200.** As discussed herein, the at least one mark **210** may be formed directly on the surface of the optical article **200,** or it may be formed on a carrier that is removably or non-removably connected to at least one surface of the optical article **200.** The inspection apparatus **800** may be used to identify information associated with the at least one mark **210.** In some examples or aspects, the inspection apparatus **800** may be configured to determine an orientation of the at least one mark **210** on the optical article **200.** Based on the orientation of the at least one mark **210** on the optical article **200,** the optical article **200** can be positioned in one or more stations at a predetermined orientation relative to the one or more stations of the coating system **100.**

In some examples, the identification apparatus **800** has at least one sensor **802** for identifying the at least one mark **210** on the optical article **200.** For example, the at least one sensor **802** may be an optical sensor, such as a camera. The optical sensor **802** may be configured to image the optical article **200.** An identification algorithm may be used to identify the at least one mark **210** from the image of the optical article **200** taken by the at least one sensor **802.** The identification algorithm may be used, for example, to identify at least one characteristic of the at least one mark **210,** such as an orientation of the at least one mark **210** relative to an orientation of a known feature on the inspection apparatus **800.** In some examples or aspects, the identification algorithm may be configured to decode information encoded in the at least one mark **210.** For example, the at least one mark **210** may contain process flow and settings that the optical article **200** will undergo during the coating process.

With continued reference to **FIG. 1****,** movement of the optical article **200** between various stations of the coating system **100** may be controlled using a placement arm **900.** In some examples or aspects, a plurality of placement arms **900** may be provided. The placement arm **900** is configured to engage the optical article **200** in a manner that maintains a known position of the optical article **200** and move the optical article **200** between different stations of the coating system **100.** The known position of the optical article **200** can be so maintained as a result of a combination of the accuracy of placement arm **900** and the proper initial positioning of the optical article **200,** such as the positioning of the optical article **200** based on the orientation of the at least one mark **210** on the optical article **200.**

The placement arm **900** may have one or more sections **902a, 902b** that are independently movable relative to a base **904** of the placement arm **900.** The one or more sections **902a, 902b** may be rotatable or translatable relative to the base **904.** The one or more sections **902a, 902b** of the placement arm **900** define an envelope in which the placement arm **900** operates to place the optical article **200** at any location within the envelope. Desirably, the placement arm **900** is configured such that all of the stations of the coating system **100** are within the envelope of the placement arm **900.** The use of the placement arm **900** allows the coating system **100** to be fully automated within the envelope of the placement arm **900** and minimizes damage to, such as marking of the surfaces of the optical article **200,** compared to a manual process, such as a fully manual process.

The optical article **200** can be wet or dry when picked up by the placement arm **900.** With some examples, when wet, the optical article **200** includes one or more wet coating layers thereon that are not hard, such as being tacky and/or uncured. With some further examples, when dry, the optical article **200** is free of coating layers or includes one or more dry coating layers that are hard (and not tacky), such as being cured. In various examples, the placement arm **900** is configured for picking up the optical article **200** by contacting at least one surface of the optical article **200.**

With continued reference to **FIG. 1****,** the coating system **100** has a pre-treatment station **500** configured for raising wettability of the optical article to promote adhesion of the at least one coating material with the optical article. In some examples or aspects, the pre-treatment station **500** may be a plasma chamber **502.** The plasma surface treatment conducted within the plasma chamber **502** can be selected from one or more art-recognized plasma surface treatment methods including, but not limited to, corona treatment, atmospheric plasma treatment, atmospheric-pressure treatment, flame plasma treatment, and/or chemical plasma treatment. With some examples, the surface treatment conducted in the plasma chamber **502** is an oxygen plasma treatment. The surface treatment process involves, with some examples, treating the surface of the optical article **200** to promote wetting and enhance adhesion of a coating that is subsequently applied to and formed thereon. The plasma chamber **502,** with some examples, may be operated under conditions of reduced atmosphere, and correspondingly the surface treatment may be conducted as a batch process.

Plasma treatments, including corona treatments, provide a clean and efficient method of altering the surface properties of an optical article **200,** such as roughening and/or chemically altering one or more surfaces thereof, without altering the bulk properties of the optical article **200.** With some examples, one or more inert gases (such as but not limited to argon and/or nitrogen) and/or one or more reactive gases (such as but not limited to oxygen, CO, and/or CO₂) can be used as the gas in the chamber **62** from which the plasma is formed. Inert gases, with some examples, roughen the surface of optical article **200.** Reactive gases such as oxygen, with some examples, can both roughen and chemically alter the surface exposed to the plasma by, for example, forming hydroxyl and/or carboxyl groups on the treated surface.

With some examples, the use of oxygen in the plasma surface treatment process can provide an effective degree of physical roughening and chemical modification of the surface of the optical article **200,** which can improve adhesion without detrimentally effecting other properties, such as optical properties, of the optical article **200.** Atmospheric air can also be used to form the plasma gas, and with some examples is a reactive gas. The extent of the surface roughening and/or chemical modification is, with some examples, a function of the plasma gas and the operating conditions of the plasma chamber **502,** including the length of time of the surface treatment. With some examples, the optical articles **200** are exposed to a plasma surface treatment for 1 to 5 minutes, such as in the plasma chamber **502,** which results in the formation of surface treated optical articles **200** that are further processed in the coating apparatus **100.** Surface treatment of the optical articles **200** within the plasma chamber **502** can also remove foreign contaminants present on the surface thereof. The presence of certain surface contaminants can, with some examples, undesirably reduce the surface energy of the surface of the optical article **200.** A high surface energy, which can result after removal of the surface contaminants, promotes coating wetting, with some examples.

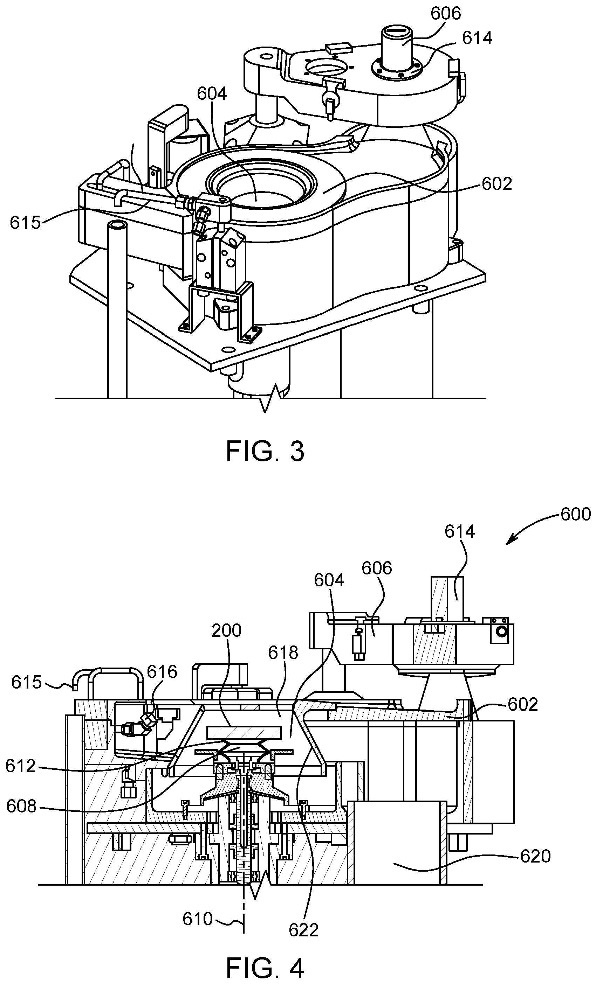

Following the plasma surface treatment in the plasma chamber **502,** the surface treated optical articles **200** can be washed in the washing and drying station **600.** With reference to **FIGS. 3-4****,** the washing and drying station **600** has housing **602** defining a wash bowl **604.** The wash bowl **604** has an open top end that is closable by a lid **606** (shown in **FIG. 3****).** Within the wash bowl **604,** a spin platform **608** is provided for receiving the optical article **200** (shown in **FIG. 4****).** The spin platform **608** is rotatable about a rotation axis **610** and has a vacuum chuck **612** that is configured for supporting the optical article **200** on the spin platform **608** via vacuum.

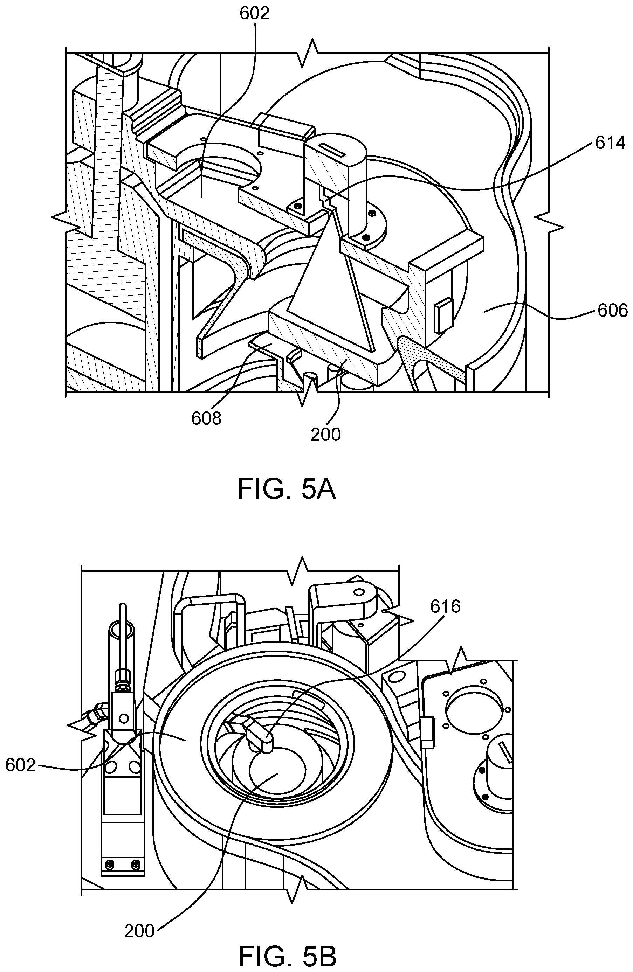

With continued reference to **FIGS. 3-4****,** the washing and drying station **600** has at least one wash nozzle **614** configured for cleaning at least one surface of the optical article **200** with a liquid, such as distilled or deionized water. In some examples or aspects, the at least one wash nozzle **614** may be configured for discharging the liquid under pressure onto at least one surface of the optical article **200** under pressure. The at least one wash nozzle **614** may be movable between a first or stowed position **(****FIG. 3****),** in which the at least one wash nozzle **614** is moved out of the way to permit loading and unloading of the optical article **200** onto the spin platform **608,** and a second or deployed position **(****FIG. 5A****),** in which the at least one wash nozzle **614** is positioned over at least a portion of the optical article **200** for washing the at least one surface of the optical article **200.** In this manner the entire upper surface and edge of the optical article **200** can be cleaned, such as with deionized water under conditions of elevated pressure, such as about 1,000 psi, with some examples. The rotatable chuck **612** can rotate during spray washing to assure even cleaning of the optical article **200.** In some examples or aspects, a final rinse nozzle **615** may be provided for a final, low pressure rinsing of the optical article **200.** The final rinse nozzle **615** desirably operates at a lower pressure than the at least one wash nozzle **614.** The washing parameters, such as liquid pressure, washing time, and rotating speed can be programmable and can vary based on parameters, such as the type and/or size of the optical article **200,** plasma treatment, and/or subsequent coating processes.

With reference to **FIG. 5B****,** the washing and drying station **600** has at least one cleaning brush **616** configured for physically cleaning at least one surface of the optical article **200.** The at least one cleaning brush **616** may be movable between a first or stowed position **(****FIG. 4****),** in which the at least one cleaning brush **616** is moved out of the way to permit loading and unloading of the optical article **200** onto the spin platform **608,** and a second or deployed position **(****FIG. 5B****),** in which the at least one cleaning brush **616** is positioned over at least a portion of the optical article **200** for contacting at least one surface of the optical article **200.** The at least one cleaning brush **616** may have a plurality of bristles configured for scouring the surface of the optical article **200.** The at least one cleaning brush **616** may be rotatable. In some examples or aspects, the at least one cleaning brush **616** may have a nozzle configured for spraying liquid during the brushing process. In this manner, the entire upper surface and edge of the optical article **200** can be cleaned. The rotatable chuck **612** can rotate during bushing to assure even cleaning of the optical article **200.** In some examples, the optical article **200** may be sprayed with liquid from the at least one wash nozzle **614** or the final rinse nozzle **615** after the brushing process is completed.

Following washing, the optical article **200** can, with some examples, be dried in the washing and drying station **600** by one or more drying methods including, but not limited to, high speed rotation of the spin platform **608** and/or high speed air nozzle(s). In some examples or aspects, and with reference to **FIG. 4****,** the wash bowl **604** may have an air inlet **618** configured for directing air toward the spin platform **608,** an air outlet **620** configured for exhausting the air from the wash bowl **604,** and a diffuser **622** between the air inlet **618** and the air outlet **620.** The diffuser **622** is configured to direct air from the air inlet **618** toward the air outlet **620** in a laminar manner. The drying parameters can be programmed in a manner similar to those associated with the washing parameters, with some examples.

With reference to **FIG. 1****,** the surface-treated and cleaned optical article **200** can be transferred to the coating apparatus **300** for applying one or more coatings to at least one surface of the optical article **200.** The coating apparatus **300** may be a plurality of coating apparatuses **300.** In some examples or aspects, the placement arm **900** may be configured for moving the optical article **200** from the washing and drying station **600** to the coating apparatus **300.** The one or more coatings may be applied on at least one surface of the optical article **200** using a number of different techniques. In some examples or aspects, the optical article **200** may be immersed into a liquid coating material. After the optical article is pulled out of the liquid, the liquid coating material forms a coating layer on the immersed surface(s) of the optical article **200.** In other examples or aspects, as disclosed herein, a liquid coating material is deposited onto a surface of the optical article **200,** which is then rotated at high speed to spread the coating material into a thin film covering the surface of the optical article **200.** In further examples or aspects, the coating apparatus **300** may be an inkjet printing apparatus that is configured to apply a coating material in the form of extremely fine droplets on a printing surface, such as one or more surfaces of the optical article **200.** In various examples or aspects, the coating apparatus **300** may be configured for applying a uniform coating or a gradient coating on at least one surface of the optical article **200.**

Following washing and drying of the optical article **200,** the placement arm **900** reengages the optical article **200** and moves it to the at least one coating apparatus **300.** The placement arm **900** may position the optical article **200** in the at least one coating apparatus **300** at a predetermined orientation relative to the at least one coating apparatus **300** based on the orientation of the at least one mark **210** and/or the information contained in the at least one mark **210.** The placement arm **900** may move the optical article **200** to the inspection apparatus **800** prior to positioning the optical article **200** in the at least one coating apparatus **300** in order to determine the orientation of the at least one mark **200** and/or the information contained in the at least one mark **210.** For example, the optical article **200** may be arranged such that the at least one mark **210** is substantially parallel, perpendicular, or arranged in any other orientation relative to a direction in which a coating material is applied to the optical article **200** using the coating apparatus **300.** In this manner, the proper orientation of the optical article **200** can be maintained during application of, for example, a gradient coating.

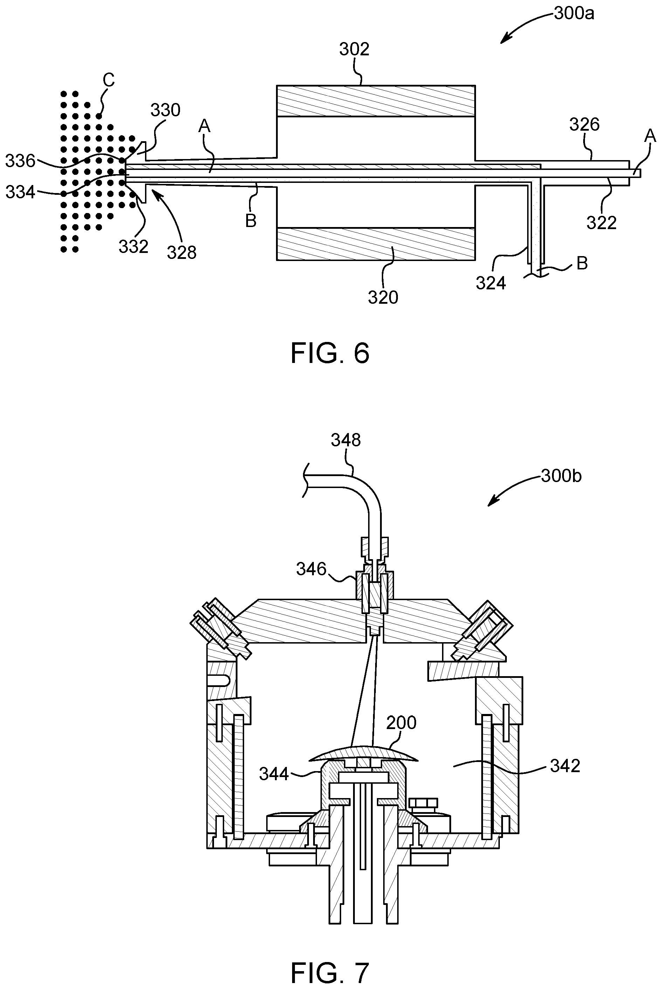

In some examples, the coating apparatus **300** may have a plurality of coating apparatuses **300.** The plurality of coating apparatuses **300** may be the same type of coating apparatuses (i.e., ultrasonic spray apparatus), or different type of coating apparatuses, such as, without limitation, inkjet coating apparatuses, spin coating apparatuses, and dip coating apparatuses. With reference to **FIG. 6****,** a first coating apparatus **300a** may be embodied as an ultrasonic discharge nozzle **302** which is configured for applying a coating material in the form of fine droplets. With reference to **FIG. 7****,** a second coating apparatus **300b,** such as a spin coating apparatus may be configured for applying a coating material onto a previously coated or uncoated optical article **200.** Following the processing of the optical article **200** in one or more stations of the coating system **100,** such as the washing and drying station **600** or the first coating apparatus **300a,** the optical article **200** may be moved the second coating apparatus **200,** such as using the placement arm **900,** for application of an additional coating layer.

With reference to **FIG. 6****,** ultrasonic spray coating (atomization) technology is a process by which high frequency sound waves are utilized to produce an atomized spray liquid. For example, a metal diaphragm vibrating at an ultrasonic frequency may be employed to create atomized liquid droplets. The resultant droplets may be precisely targeted toward a surface to be coated. Ultrasonic atomization, as employed according to various examples of the present invention, advantageously has been found to assist in imparting improved process control and precise, uniform thin film coatings for lenses. A controller may control the size of the drop (volume of coating material) and the speed at which the drop is formed and delivered.

With continued reference to **FIG. 6****,** an exemplary ultrasonic discharge nozzle **302** has a housing **320** with at least one liquid feed channel extending through the housing **320.** The housing **320** has a diaphragm (not shown) that vibrates at an ultrasonic frequency to create atomized liquid droplets. In some examples, the housing **320** has a first liquid channel **322** and a second liquid channel **324** extending therethrough. The first liquid channel **322** and the second liquid channel **324** extend substantially parallel to one another through the housing **320.** In some examples, the first liquid channel **322** and the second liquid channel **324** may be coaxial such that one of the first liquid channel **322** and the second liquid channel **324** extends through a bore of the other of the first liquid channel **322** and the second liquid channel **324.** Each of the first liquid channel **322** and the second liquid channel **324** has a first end **326** opposite a second end **328** along a longitudinal axis. The first end **326** of each of the first liquid channel **322** and the second liquid channel **324** is in fluid communication with a coating material storage system, as described herein.

With continued reference to **FIG. 6****,** the second end **328** of the first liquid channel **322** and the second liquid channel **324** terminates in a nozzle **330** having an atomizing surface **332.** The nozzle **330** has a first outlet **334** for delivering fluid through the first liquid channel **322** and a second outlet **336** for delivering fluid through the second liquid channel **322.** In some examples, the first outlet **334** may be configured for delivering the first coating material through the first liquid channel **322,** while the second outlet **336** may be configured for delivering one or more additional coating materials through the second liquid channel **322.** As the first coating material and the one or more additional coating materials are delivered to the atomizing surface **332** of the nozzle **330,** the coating materials mix at the nozzle **330** and are atomized by the ultrasonic vibration of the ultrasonic discharge nozzle **302** into an atomized mixture **C** prior to being deposited on a coating surface of the optical article **10.**

In various examples or aspects, the one or more ultrasonic discharge nozzles **302** may be controlled to apply uniform or non-uniform thickness of a coated layer in a controlled, predetermined pattern of atomized droplets. For example, the one or more ultrasonic discharge nozzles **302** may apply a coating having a substantially uniform thickness over an entire coating surface of the optical article **200.**

In some examples, a plurality of ultrasonic discharge nozzles **302** may be arranged in an array. The plurality of ultrasonic discharge nozzles **302** may be arranged parallel to one another in a direction that is angled relative to a direction in which the plurality of ultrasonic discharge nozzles **302** are moved relative to the optical article **200.** Offsetting the ultrasonic discharge nozzles **302** at an angle allows a complete coverage of optical article **200** of various shapes and sizes. In other examples, the ultrasonic discharge nozzles **302** may be arranged linearly next to one another in a direction substantially parallel or perpendicular to the direction in which the ultrasonic discharge nozzles **302** are moved relative to the optical article **200.**

With reference to **FIG. 7****,** the second coating apparatus **300b** may be a spin coating apparatus having a coater bowl **342,** which can be a rotatable vacuum chuck **344** with some embodiments. The rotatable chuck **344** is configured to receive the optical article **200** within coater bowl **342** and is configured to rotate the optical article **200** during coating, the speed and timing of which can vary depending upon parameters including, but not limited to, the coating and optical article **200.** At least one dispense nozzle **346** is configured for dispensing a select amount of the coating material onto the top surface of the optical article **200,** preferably in a center portion of the top surface of the optical article **200.** The coating material is evenly spread across the top surface of the optical article **200** during high-speed rotation of the optical article **200** on the rotatable vacuum chuck **344.** The dispense nozzle **346** may be connected to a coating material storage system via a supply line **348.**

The coater bowl **302** is configured to collect excess coating material expelled from the optical article **200** that is coated therein, and/or cleaning materials that are periodically utilized to clean coater bowl **302** (such as at the end of the week, or day, or shift). The second coating apparatus **300b** of the present invention is effective as a once through system for small scale production, with some embodiments.

With reference to **FIG. 1****,** each coating apparatus **300** is in fluid communication with a coating material storage system **1000** (hereinafter referred to as "storage system **1000").** The storage system **1000** is configured for containing the coating material and selectively supplying the coating material to each coating apparatus **300** during a coating application process. In some examples or aspects, the storage system **1000** may contain a single coating material that is selectively supplied to each coating apparatus **300** during the coating application process. In other examples or aspects, the storage system **1000** may contain a plurality of different coating materials, each of which can be independently selected and supplied to each coating apparatus **300** during the coating application process. In this manner, a plurality of coating materials may be supplied to each coating apparatus **300** to create a desired mixture of the coating materials.

The coating material can, with some examples, include a curable resin composition, and optionally, a solvent. The coating material can be in the form of art-recognized liquid coating materials and powder coating materials. The coating material can be thermoplastic, radiation curable such as by ultraviolet radiation or electron beam, or thermosetting coating material. With some examples, the coating materials are selected from curable or thermosetting coating materials. Coating materials can include kinetic enhancing additives, photoinitiators, and thermal initiators. With some examples, coating materials can include a static dye, a photochromic material, or a combination thereof. Alternatively or additionally, the optical article **200** can include a static dye, a photochromic material, or a combination thereof. Various coating materials can be used for applying primer coatings and films; protective coatings and films, including transitional coatings and films and abrasion resistant coatings and films; anti-reflective coatings and films; polarizing coatings and films; and combinations thereof.

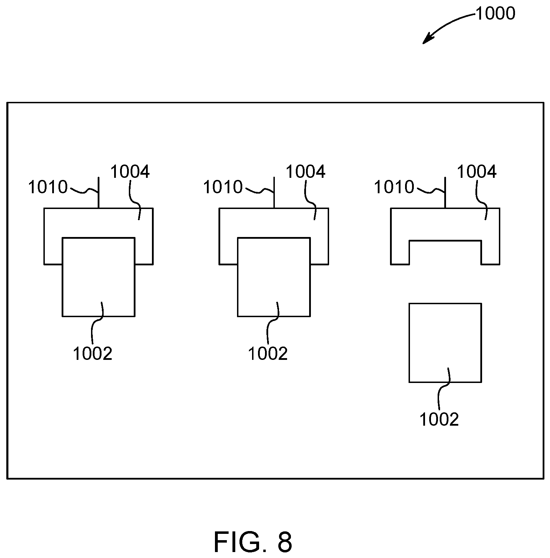

With reference to **FIG. 8****,** the storage system **1000** may have at least one replaceable cartridge **1002.** Each replaceable cartridge **1002** of the storage system **1000** may be configured for containing the coating material, recirculating the coating material in a recirculation loop, and selectively dispensing a desired amount of coating material to the coating apparatus **300.** In some examples or aspects, a plurality of replaceable cartridges **1002** are provided. Each replaceable cartridge **1002** may contain a different coating material. In some examples or aspects, at least some of the plurality of replaceable cartridges **1002** may contain the same coating material.

With continued reference to **FIG. 8****,** each replaceable cartridge **1002** can be removed from the storage system **1000** for cleaning, refilling, and servicing. For example, the storage system **1000** may have a plurality of bays **1004,** each of which is configured to receive a single replaceable cartridge **1002.** Each bay **1004** has a first pneumatic connector **1006** and a first electric connector **1008** configured for connecting to the corresponding pneumatic and electric connectors on the replaceable cartridge **1002.** In this manner, each replaceable cartridge **1002** can be quickly and easily connected to or disconnected from the respective bay **1004** of the storage system **1000.** In some examples or aspects, inserting the replaceable cartridge **1002** into the bay **1004** may automatically establish a pneumatic and electric connection between the replaceable cartridge **1002** and the storage system **1000.** In other examples or aspects, pneumatic and electrical connections between the replaceable cartridge **1002** and the bay **1004** can be done separately after inserting the replaceable cartridge **1002** into the bay **1004.** Similarly, removing the replaceable cartridge **1002** from the bay **1004** may automatically disconnect the pneumatic and electric connections between the replaceable cartridge **1002** and the storage system **1000.** In other examples or aspects, pneumatic and electrical connections between the replaceable cartridge **1002** and the bay **1004** can be disconnected separately prior to or after removal of the replaceable cartridge **1002** from the bay **1004.**

With continued reference to **FIG. 8****,** when connected to the bay **1004** of the storage system **1000,** each replaceable cartridge **1002** may be fluidly connected to a delivery line **1010** configured to deliver the coating material from the replaceable cartridge **1002** to the at least one coating apparatus **300.** In some examples or aspects, each replaceable cartridge **1002,** when connected to the respective bay **1004,** may be connected to the at least one coating apparatus **300** via a dedicated delivery line **1010.** In other examples or aspects, delivery lines **1010** from each replaceable cartridge **1002** may be connected to a manifold that is then connected to the at least one coating apparatus **300.**

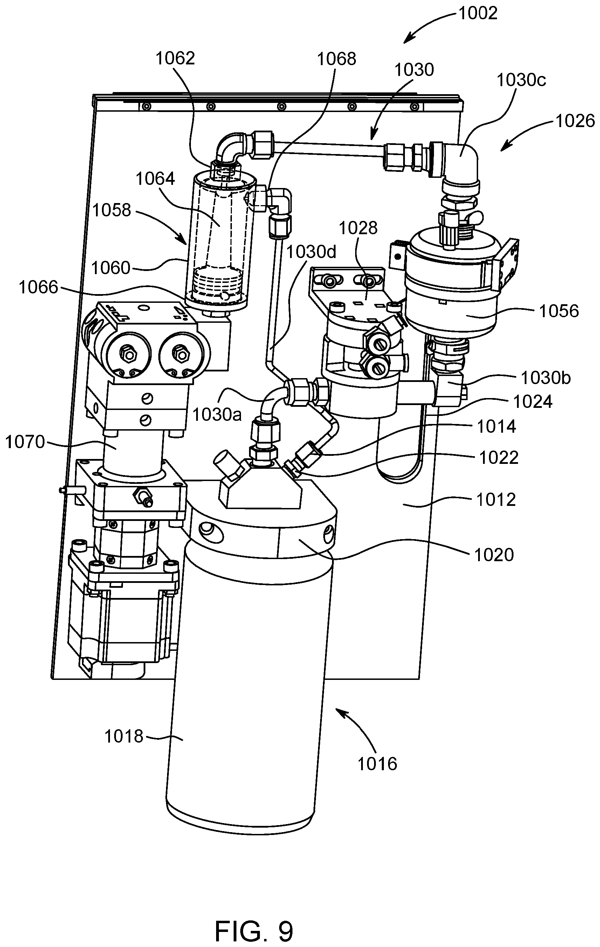

With reference to **FIG. 9****,** the replaceable cartridge **1002** has a frame **1012** configured for supporting various components for containing the coating material, recirculating the coating material in a recirculation loop, and selectively dispensing a desired amount of coating material to the coating apparatus **300.** The frame **1012** may be configured to removably or non-removably support the various components. In some examples or aspects, the frame **1012** may be configured for interacting with the bay **1004,** such as by having at least one side that is slidably engagable with at least a portion of the bay **1004.** The frame **1012** can, in some examples or aspects, be a planar material having a sufficient thickness to support the various components configured for containing the coating material, recirculating the coating material in a recirculation loop, and selectively dispensing a desired amount of coating material to the coating apparatus **300.** The frame **1012** can be made from a metal material, a plastic material, or a combination of metal and plastic materials. In some examples or aspects, the frame **1012** may have a handle **1014** for handling the frame **1012** during removal of the frame **1012** from the bay **1004** and/or insertion of the frame **1012** into the bay **1004.**

With continued reference to **FIG. 9****,** the replaceable cartridge **1002** has a reservoir **1016** configured for containing a volume of a coating material. In some examples or aspects, the reservoir **1016** has a storage portion **1018** defining an interior for containing the coating material, and a cap **1020** that is removably connectable to the storage portion **1018** and is configured for enclosing the interior of the storage portion **1018.** At least one of the storage portion **1018** and the cap **1020** may be removably connected to the frame **1012.** In some examples or aspects, the reservoir **1016** may have a volume of 1L to 20L. The coating material inside the reservoir **1016** may be kept at ambient pressure, a vacuum pressure, or a positive pressure.

In some examples or aspects, the storage portion **1018** may be a conventional coating reservoir that is provided by a manufacturer of the coating material. Such a storage portion **1018** may be removably connectable to cap **1020.** In this manner, the storage portion **1018** may be discarded after the coating material is used up and a new storage portion **1018** filled with the coating material can be connected to the cap **1020.** In other examples or aspects, the storage portion **1018** may be re-fillable with the coating material after the coating material is used up.

With continued reference to **FIG. 9****,** the cap **1020** has an outlet **1022** configured for delivering the coating material out of the storage portion **1018** and an inlet **1024** configured for returning the coating material into the storage portion **1018.** The outlet **1022** and inlet **1024** are connected to a recirculation loop **1026** that is configured for circulating the coating material from the reservoir **1016** using a first pump **1028.** In some examples or aspects, the recirculation loop **1026** comprises tubing **1030** having a first end connected to the outlet **1022** and a second end connected to the inlet **1024.** In this manner, the recirculation loop **1026** is in fluid communication with the reservoir **1016.** Various additional elements may be disposed in-line with the tubing **1030** between the first end and the second end such that these additional elements are in fluid communication with the recirculation loop **1026,** as described herein. When additional elements are provided in-line with the tubing **1030,** the tubing **1030** may comprise a plurality of tubing segments interconnecting the various elements and being in fluid communication with each other.

With continued reference to **FIG. 9****,** the replaceable cartridge **1002** has the first pump **1028** in-line with the recirculation loop **1028.** The first pump **1028** is connected to the outlet **1022** of the reservoir **1016** via a first tubing segment **1030a.** In some embodiments or aspects, the first pump **1028** may be configured to aspirate the coating material from the reservoir **1016** and pump the coating material through the recirculation loop **1026** to be delivered back into the storage portion **1018** via the inlet **1024** or to be delivered to the at least one coating apparatus **300** via a second pump, as described herein. In some examples or aspects, the first pump **1028** may be configured to continuously circulate the coating material through the recirculation loop **1016** while the replaceable cartridge **1002** is connected to the coating system **100.** In this manner, the coating material is continuously mixed to prevent separation of solids and to extend the life of the coating material.

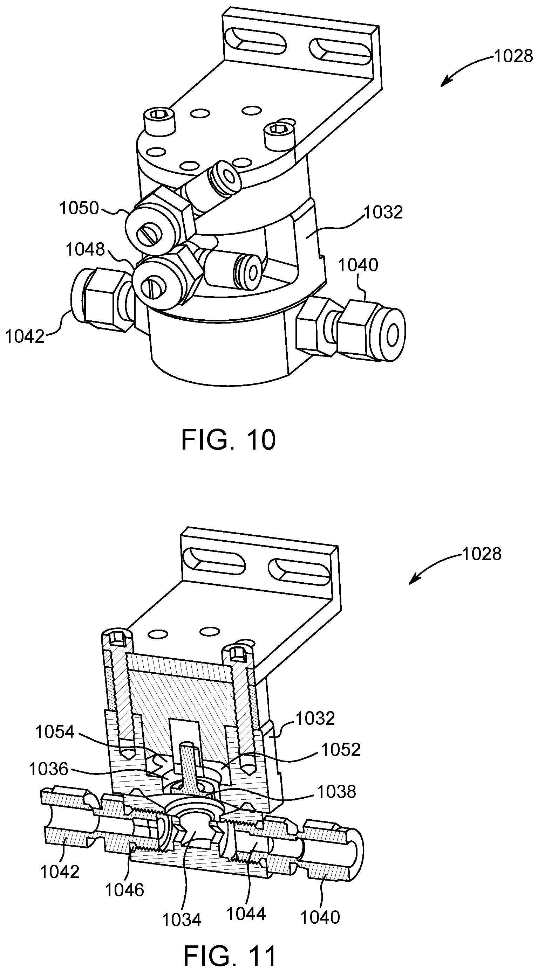

With reference to **FIGS. 10-11****,** the first pump **1028** is a diaphragm pump configured for recirculating the coating material from the reservoir **1016** through the recirculation loop **1026.** In some examples or aspects, the first pump **1028** may be any other kind of pump that is configured for continuously recirculating the coating material from the reservoir **1016** through the recirculation loop **1026.** When embodied as a diaphragm pump, and as shown in **FIG. 11****,** the first pump **1028** includes a housing **1032** having a first chamber **1034** and a second chamber **1036** in fluid isolation from the first chamber **1034** via a flexible membrane **1038.** The flexible membrane **1038** is configured to deflect in response to a pressure differential between the first chamber **1034** and the second chamber **1036.** In this manner, by controlling the pressure differential across the chambers **1034, 1036,** the first pump **1028** can pump the coating material.

With continued reference to **FIGS. 10-11****,** the first pump **1028** further includes a liquid inlet **1040** and a liquid outlet **1042** in fluid communication with the first chamber **1034.** The liquid inlet **1040** has a liquid inlet check valve **1044** and the liquid outlet **1042** has a liquid outlet check valve **1046.** The liquid inlet check valve **1044** and the liquid outlet check valve **1046** may be one-way check valves configured to permit flow in a first direction and prevent flow in a second direction opposite to the first direction. The first pump **1028** further includes an air inlet **1048** and an air outlet **1050** in fluid communication with the second chamber **1036.** In some examples or aspects, the air inlet **1048** has an air inlet check valve **1052** operable between an air inlet open positon and an air inlet closed position and the air outlet **1050** has an air outlet check valve **1054** operable between an air outlet open positon and an air outlet closed position. Similar to the liquid inlet and outlet check valves **1044, 1044,** the air inlet check valve **1052** and the air outlet check valve **1054** may be one-way check valves configured to permit flow in a first direction and prevent flow in a second direction opposite to the first direction.

In some examples or aspects, the air inlet check valve **1052** may be operable between the air inlet open positon and the air inlet closed position independent of operation of the air outlet check valve **1054** between the air outlet open positon and the air outlet closed position. For example, a controller **1100** (shown in **FIG. 1****)** may be provided for controlling independent operation of the air inlet check valve **1052** and the air outlet check valve **1054.** By controlling the state of the air inlet check valve **1052** and the air outlet check valve **1054,** pressure in the second chamber **1036** can be controlled to, in turn, control the position of the flexible membrane **1038.** In this manner, by controlling a position of the flexible membrane **1038,** liquid coating composition can be pumped through the first chamber **1034.**

With reference to **FIG. 9****,** the replaceable cartridge **1002** has a filter **1056** positioned in-line and in fluid communication with the recirculation loop **1028.** The filter **1056** may be positioned downstream of the first pump **1028** and may be connected to the liquid outlet **1042** of the first pump **1028** via a second tubing segment **1030b.** The filter **1056** may be configured for filtering the coating material circulating through the recirculation loop **1026.**

With reference to **FIG. 9****,** the replaceable cartridge **1002** has a de-bubbling system **1058** positioned in-line and in fluid communication with the recirculation loop **1028.** The de-bubbling system **1058** may be positioned downstream of the filter **1056** and may be connected to the filter **1056** via a third tubing segment **1030c.** The de-bubbling system **1058** may be configured for removing air bubbles in the coating material circulating through the recirculation loop **1026.**

With continued reference to **FIG. 9****,** the de-bubbling system **1058** has a chamber 1060 configured for receiving the coating material from the filter **1056** via the third tubing segment **1030c.** The third tubing segment **1030c** may be connected to a first end **1062** of the chamber **1060.** A conical separator **1064** is positioned within the chamber **1060** and is configured for attracting any air bubbles in the coating material as the coating material flows down the conical separator **1064.** The attracted air bubbles are dislodged from the conical separator **1064** and float toward the first end **1062** of the chamber **1060.** A second end **1066** of the chamber **1060** is positioned at an inlet of the second pump, as described herein. As the coating material fills the chamber **1060,** the level of the coating material in the chamber **1060** rises in a direction from the second end **1066** toward the first end **1062.** A chamber outlet **1068** is provided in a sidewall of the chamber **1060** proximate to the first end **1062.** The chamber outlet **1068** is in fluid communication with the reservoir **1026** via a fourth tubing segment **130d.** In this manner, de-bubbled coating material can be returned from the de-bubbling system **1058** into the reservoir **1026** via the fourth tubing segment **1030d.**

With continued reference to **FIG. 9****,** the replaceable cartridge **1002** has a second pump **1070** positioned in-line and in fluid communication with the recirculation loop **1028.** The second pump **1070** is connected to the second end **1066** of the de-bubbling system **1058** and is configured to aspirate the coating material from the chamber **1060** of the de-bubbling system **1058.** In some embodiments or aspects, the second pump **1070** is operable to aspirate a select amount of the coating material from the recirculation loop **1026,** such as from the de-bubbling system **1058,** and deliver the select amount of the coating material to the at least one coating apparatus **300.**

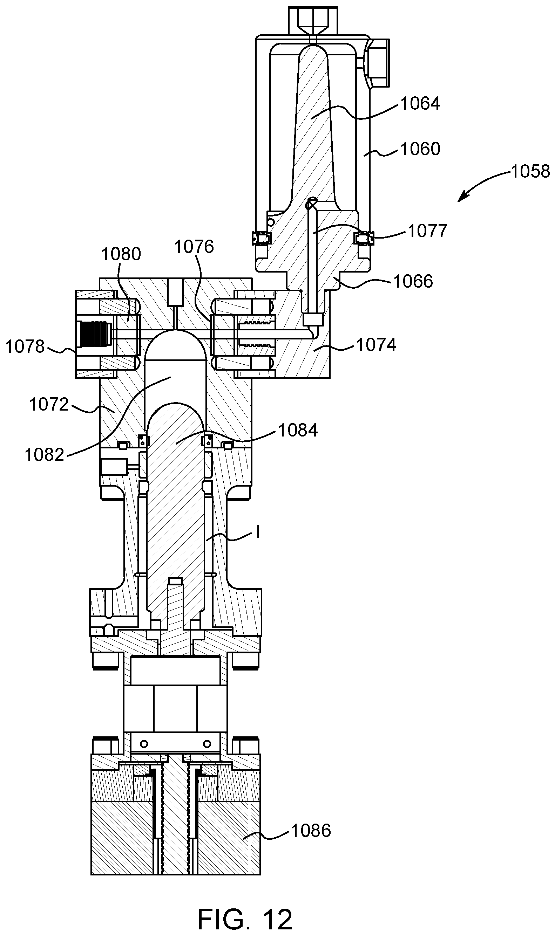

With reference to **FIG. 12****,** the second pump **1070** may be a piston pump. In some examples or aspects, the second pump **1070** may be any other kind of pump that is configured for aspirating a select amount of the coating material from the recirculation loop **1026** and delivering the coating material to the at least one coating apparatus **300.** When embodied as a piston pump, the second pump **1070** includes a housing **1072** having an inlet **1074** with an inlet valve **1076,** an outlet **1078** having an outlet valve **1080,** and a pumping chamber **1082** between the inlet valve **1076** and the outlet valve **1080.** The inlet valve **1076** is in fluid communication with the recirculation loop **1026,** such as via an inlet tube **1077** connected to the de-bubbling system **1058** while the outlet valve **1080** is in fluid communication with the at least one coating apparatus **300.** The piston pump **1070** further includes a piston **1084** disposed within the pumping chamber **1082** and configured for reciprocal movement within the pumping chamber **1082** via a drive member **1086.** The drive member **1086** may include an actuator configured for reciprocally moving the piston **1084.** In some examples or aspects, the actuator may be a stepper motor. A controller may be configured to control operation of the actuator to accurately dispense a select amount of the coating material from the recirculation loop **1026** and deliver the coating material to the at least one coating apparatus **300.** In some examples or aspects, each replaceable cartridge **1002** may have various additional devices, such as heaters, mixers, or the like, may be associated with each replaceable cartridge **1002** for preparing the coating material prior to delivery to the at least one coating apparatus **300.**

With reference to **FIG. 1****,** the coating system **100** has the curing station **401** having at least one curing apparatus **400,** wherein each curing apparatus is independently configured to at least partially cure the at least one coating material applied to the optical article **200.** Following the application of the desired coating material to at least one surface of the optical article **200,** the placement arm **900** may be configured to move the optical article **200** to the curing station **401.** With some examples or aspects, the curing station **401** includes at least one of: (i) a thermal curing apparatus; (ii) a UV curing apparatus; (iii) an IR curing apparatus; and (iv) combinations of at least two of (i), (ii), and (iii).

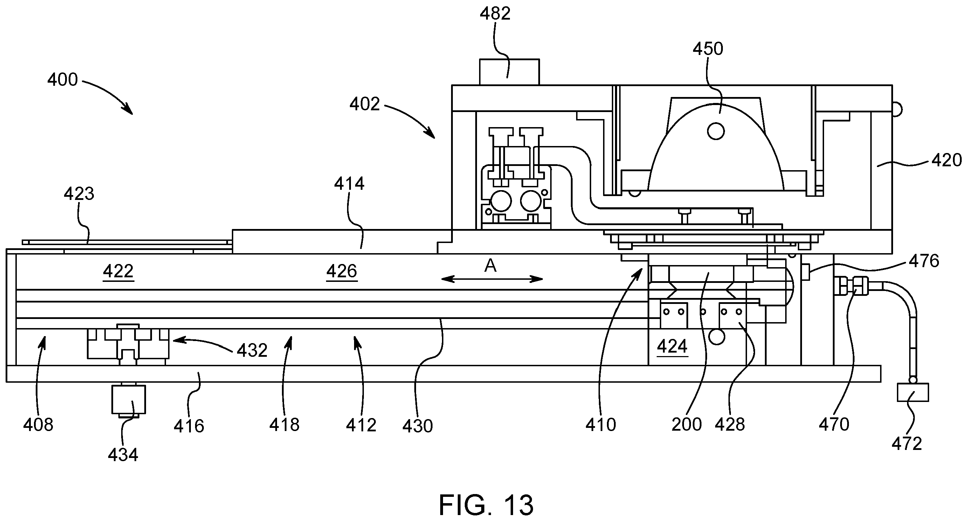

With reference to **FIG. 13****,** the curing apparatus **400** that is embodied as a UV curing apparatus is shown in accordance with some examples or aspects of the present disclosure. The curing apparatus **400** has a housing **402** defining a loading portion **408** that is open to ambient atmosphere, a curing portion **410** having a controlled atmosphere, and a transition portion **412** extending between the loading portion **408** and the curing portion **410.** The loading portion **408,** the curing portion **410,** and the transition portion **412** define separate chambers within an interior **418** of the housing **402.** The loading portion **408** has a loading chamber **422** configured for receiving an optical article **200** during loading and loading. The loading portion **408** is open to ambient atmosphere and may be enclosed by a door **423.** The curing portion **410** has a curing chamber **424** having the controlled atmosphere for curing the optical article **200.** The loading chamber **422** and the curing chamber **424** are connected to each other via a transition chamber **426** of the transition portion **412.**

With continued reference to **FIG. 13****,** the curing apparatus **400** includes a carrier **428** movable between the loading chamber **422** and the curing chamber **424** via the transition chamber **426.** The carrier **428** is movable between the loading chamber **422** and the curing chamber **424** on a rail **430** in a direction of arrow **A** in **FIG. 13****.** The carrier **428** is supported on an upper portion of the rail **430** and is movable between the loading chamber **422** and the curing chamber **424** via a transfer mechanism **432.** As described herein, the carrier **128** is configured for supporting the optical article **200** for moving the optical article **200** between the loading portion **408** and the curing portion **410.**

In some examples or aspects, the transfer mechanism **432** includes a drive element **434,** such as a motor, a linear actuator, or a rotary actuator that is operatively connected to the carrier **428.** The carrier **428** may be operatively connected to the drive element **434** via a belt, chain, rod, or other mechanical connection. Actuation of the transfer mechanism **432** may be controlled by a controller, as described hereinafter, and results in movement of the carrier **428.**

With continued reference to **FIG. 13****,** the curing apparatus **400** has at least one ultraviolet radiation source **450** (hereinafter referred to "UV source **450")** operative for transmitting ultraviolet (UV) radiation into the curing chamber **424.** The at least one UV source **450** is positioned such that at least a portion of the UV radiation emitted therefrom is incident on at least one surface of the optical article **200** when the optical article **200** is positioned in the curing chamber **424.** In some examples, the at least one ultraviolet radiation source **450** may be an ultraviolet lamp having at least one bulb, such as a mercury bulb, configured for emitting radiation within the ultraviolet spectrum. The specifications of the at least one ultraviolet radiation source **450** may be selected depending on a type of coating to be cured.

With reference to **FIG. 13****,** the curing chamber **424** of the curing apparatus **400** may have an atmosphere that is different from the atmosphere outside the curing chamber **424.** In some examples or aspects, the curing chamber **424** may have an inert atmosphere due to increased concentration of an inert gas, such as nitrogen or one or more noble gases. Without intending to be bound by theory, it has been found that curing of the coating covering the optical article **200** can be significantly improved when the coating is cured in a controlled and inert atmosphere that is different from ambient atmosphere. With continued reference to **FIG. 13****,** at least one nozzle **470** may be provided for delivering the inert gas into the curing chamber **424.** The at least one nozzle **470** is in communication with a vessel **472** containing the inert gas. At least one sensor **476** may be provided for detecting a concentration of the inert gas in the curing chamber **424.** Output from the at least one sensor **476** may be used for adjusting a flow rate of the inert gas through the at least one nozzle **470** to maintain the concentration of the inert gas at a predetermined level.

In some examples or aspects, the curing apparatus **400** may be embodied as an IR curing apparatus that includes an appropriate IR source. In further examples, the curing apparatus **400** may be embodied as a thermal curing apparatus having a thermal oven. The thermal oven can, with some examples, be an electric oven and/or a gas fired oven (such as a natural gas fired oven). With some examples or aspects, a coated and cured optical article **200** can be returned from the curing apparatus **400** to: (i) the washing and drying station **600;** and/or (ii) the coating apparatus **300** for the application of a subsequent coating material. The cured optical article **200** can, with some examples, be moved via the placement arm **900** to an accumulation area **490** for final inspection and/or packing.

With reference to **FIG. 1****,** the coating system **100** has at least one controller **1100** operatively connected to at least one component of the coating system **100.** In some examples or aspects, the at least one controller **1100** may be configured to control operation of at least one component of the coating apparatus **300,** the curing apparatus **400,** the pre-treatment station **500,** the washing and drying station **600,** the marking apparatus **700,** the inspection apparatus, **800,** the placement arm **900,** and the at least one replaceable cartridge **1000.** In other examples or aspects, separate controllers **1100** may be provided for each of the coating apparatus **300,** the curing apparatus **400,** the pre-treatment station **500,** the washing and drying station **600,** the marking apparatus **700,** the inspection apparatus, **800,** the placement arm **900,** and the at least one replaceable cartridge **1000.**

In some examples or aspects, the at least one controller **1100** may be a microprocessor controller. The at least one controller **1100** may be configured for pulse width modulated (PWM) operation, wherein analog operation of at least one component of the coating apparatus **300,** the curing apparatus **400,** the pre-treatment station **500,** the washing and drying station **600,** the marking apparatus **700,** the inspection apparatus, **800,** the placement arm **900,** and the at least one replaceable cartridge **1000** can be achieved using digital control signals. In some examples or aspects, the at least one controller **1100** may be configured for continuously modulated control of at least one component of the coating apparatus **300,** the curing apparatus **400,** the pre-treatment station **500,** the washing and drying station **600,** the marking apparatus **700,** the inspection apparatus, **800,** the placement arm **900,** and the at least one replaceable cartridge **1000.** The at least one controller **1100** may have memory configured for storing one or more predetermined automated processes. In some examples or aspects, the at least one controller **1100** may be configured for operating on a 110V or a 220V AC power circuit, and/or on battery power. In other examples or aspects, the at least one controller 1100 may be configured for operating on a 12V DC power circuit.

The present invention has been described with reference to specific details of particular examples thereof. It is not intended that such details be regarded as limitations upon the scope of the invention except insofar as and to the extent that they are included in the accompanying claims.

## Claims

1. A coating system (100) for coating an optical article (200), the coating system (100) comprising:
at least one replaceable cartridge (1002) comprising a reservoir (1016) configured for containing a volume of a coating material; and
at least one coating apparatus (300) operable to coat at least a portion of the optical article (200) with a select amount of the coating material from an engaged at least one replaceable cartridge (1002),
**characterized in that** the at least one replaceable cartridge (1002) further comprises a recirculation loop (1026) in fluid communication with the reservoir (1016), and a first pump (1028) and a second pump (1070) in fluid communication with the recirculation loop (1026), and
wherein the second pump (1070) of each of the engaged at least one replaceable cartridge (1002) is operable to aspirate the select amount of the coating material from the recirculation loop (1026) and deliver the select amount of the coating material to the at least one coating apparatus (300).

2. The coating system (100) according to claim 1, wherein the first pump (1028) is a diaphragm pump configured for recirculating the coating material from the reservoir (1016) through the recirculation loop (1026).

3. The coating system (100) according to claim 1 or claim 2, wherein the second pump (1070) is a piston pump comprising a piston (1084) disposed within a pumping chamber (1082) and configured for reciprocal movement within the pumping chamber (1082) via a drive member (1086).

4. The coating system (100) according to any one of claims 1 to 3, wherein the at least one coating apparatus (300) comprises a first coating apparatus (300a) and a second coating apparatus (300b) each selectively operable to coat at least a portion of the optical article (200) with the select amount of the coating material from the engaged at least one coating reservoir (1016).

5. The coating system (100) according to claim 4, wherein the first coating apparatus (300a) comprises an ultrasonic discharge nozzle (302) configured for atomizing the select amount of coating material from the engaged at least one coating reservoir (1016).

6. The coating system (100) according to claim 4 or claim 5, wherein the second coating apparatus (300b) is a spin coating apparatus.

7. The coating system (100) according to any one of claims 1 to 6, further comprising a marking apparatus (700) configured for marking at least one surface of the optical article (200) with at least one mark (210); and an identification apparatus (800) configured for identifying the at least one mark (210), wherein the at least one mark (210) contains information for processing the optical article (200) in the coating system (100).

8. The coating system (100) according to claim 7, further comprising a placement arm (900) configured to move the optical article (200) from the identification apparatus (800) to the at least one coating apparatus (300) and position the optical article (200) at a predetermined orientation relative to at least one coating apparatus (300) based on the orientation of the at least one mark (210).

9. The coating system (100) according to any one of claims 1 to 8, further comprising a pre-treatment station (500), wherein the pre-treatment station (500) is configured for raising wettability of the optical article (200) to promote adhesion of the at least one coating material with the optical article (200).

10. The coating system (100) according to any one of claims 1 to 9, further comprising a cleaning station (600) comprising:
a housing (602) having a wash bowl (604) and a lid (606) for enclosing the wash bowl (604);
a spin platform (608) within the wash bowl (604) configured for receiving the optical article (200); and
at least one wash nozzle (614) configured for cleaning at least one surface of the optical article (200) with a pressurized liquid.

11. The coating system (100) according to claim 10, wherein the wash bowl (604) comprises an air inlet (618) configured for directing air toward the spin platform (608), an air outlet (620) configured for exhausting the air from the wash bowl (604), and a diffuser (622) between the air inlet (618) and the air outlet (620).

12. The coating system (100) according to any one of claims 1 to 11, further comprising at least one curing station (401), where each curing station (401) is independently configured to at least partially cure the at least one coating material applied to the optical article (200).

13. The coating system (100) according to claim 12, wherein each curing station (401) independently comprises at least one of (i) a thermal curing station; (ii) a UV curing station; (iii) an IR curing station; or (iv) combinations of at least two of (i), (ii), and (iii).

14. The coating system according to any one of claims 1 to 13, further comprising a filter (1056) in fluid communication with the recirculation loop (1026), wherein the filter (1056) is configured for filtering the coating material circulating through the recirculation loop (1026).

15. The coating system according to any one of clams 1 to 14, further comprising a de-bubbling system (1058) in fluid communication with the recirculation loop (1026), the de-bubbling system (1058) configured for removing air bubbles in the coating material circulating through the recirculation loop (1026).

## Patentansprüche

1. Beschichtungssystem (100) zum Beschichten eines optischen Gegenstands (200), wobei das Beschichtungssystem (100) umfasst:
mindestens eine ersetzbare Kartusche (1002), die ein Reservoir (1016) umfasst, das zum Enthalten eines Volumens eines Beschichtungsmaterials gestaltet ist; und
mindestens eine Beschichtungsvorrichtung (300), die funktionsfähigist, mindestens einen Teil des optischen Gegenstands (200) mit einer ausgewählten Menge des Beschichtungsmaterials aus einer in Eingriff stehenden mindestens einen ersetzbaren Kartusche (1002) zu beschichten,
**dadurch gekennzeichnet, dass** die mindestens eine ersetzbare Kartusche (1002) ferner eine Rezirkulationsschleife (1026) in Fluidverbindung mit dem Reservoir (1016) und eine erste Pumpe (1028) und eine zweite Pumpe (1070) in Fluidverbindung mit der Rezirkulationsschleife (1026) umfasst, und
wobei die zweite Pumpe (1070) jeder der in Eingriff stehenden mindestens einen ersetzbaren Kartusche (1002) funktionsfähig ist, die ausgewählte Menge des Beschichtungsmaterials aus der Rezirkulationsschleife (1026) einzuziehen und die ausgewählte Menge des Beschichtungsmaterials an die mindestens eine Beschichtungsvorrichtung (300) zu abzugeben.

2. Beschichtungssystem (100) nach Anspruch 1, wobei die erste Pumpe (1028) eine Membranpumpe ist, die zum Rezirkulieren des Beschichtungsmaterials aus dem Reservoir (1016) durch die Rezirkulationsschleife (1026) gestaltet ist.

3. Beschichtungssystem (100) nach Anspruch 1 oder Anspruch 2, wobei die zweite Pumpe (1070) eine Kolbenpumpe ist, die einen Kolben (1084) umfasst, der in einer Pumpenkammer (1082) angeordnet und für Hin- und Herbewegung in der Pumpenkammer (1082) über ein Antriebselement (1086) gestaltet ist.

4. Beschichtungssystem (100) nach einem der Ansprüche 1 bis 3, wobei die mindestens eine Beschichtungsvorrichtung (300) eine erste Beschichtungsvorrichtung (300a) und eine zweite Beschichtungsvorrichtung (300b) umfasst, die jeweils selektiv betreibbar sind, um mindestens einen Teil des optischen Gegenstands (200) mit der ausgewählten Menge des Beschichtungsmaterials aus dem in Eingriff stehenden mindestens einen Beschichtungsreservoir (1016) zu beschichten.

5. Beschichtungssystem (100) nach Anspruch 4, wobei die erste Beschichtungsvorrichtung (300a) eine Ultraschall-Ausstoßdüse (302) umfasst, die zum Zerstäuben der ausgewählten Menge an Beschichtungsmaterial aus dem in Eingriff stehenden mindestens einen Beschichtungsreservoir (1016) gestaltet ist.

6. Beschichtungssystem (100) nach Anspruch 4 oder Anspruch 5, wobei die zweite Beschichtungsvorrichtung (300b) eine Schleuderbeschichtungsvorrichtung ist.

7. Beschichtungssystem (100) nach einem der Ansprüche 1 bis 6, ferner umfassend eine Markierungsvorrichtung (700), die zum Markieren mindestens einer Oberfläche des optischen Gegenstands (200) mit mindestens einer Markierung (210) gestaltet ist; und eine Identifikationsvorrichtung (800), die zum Identifizieren der mindestens einen Markierung (210) gestaltet ist, wobei die mindestens eine Markierung (210) Informationen zur Verarbeitung des optischen Gegenstands (200) in dem Beschichtungssystem (100) enthält.

8. Beschichtungssystem (100) nach Anspruch 7, ferner umfassend einen Platzierungsarm (900), der dafür gestaltet ist, den optischen Gegenstand (200) von der Identifikationsvorrichtung (800) zu der mindestens einen Beschichtungsvorrichtung (300) zu bewegen und den optischen Gegenstand (200) auf der Grundlage der Ausrichtung der mindestens einen Markierung (210) in einer vorgegebenen Ausrichtung relativ zu mindestens einer Beschichtungsvorrichtung (300) zu positionieren.

9. Beschichtungssystem (100) nach einem der Ansprüche 1 bis 8, ferner umfassend eine Vorbehandlungsstation (500), wobei die Vorbehandlungsstation (500) zum Erhöhen der Benetzbarkeit des optischen Gegenstands (200) gestaltet ist, um die Haftung des mindestens einen Beschichtungsmaterials an dem optischen Gegenstand (200) zu fördern.

10. Beschichtungssystem (100) nach einem der Ansprüche 1 bis 9, ferner umfassend eine Reinigungsstation (600) umfassend:
ein Gehäuse (602) mit einem Waschbecken (604) und einem Deckel (606) zum Verschließen des Waschbeckens (604);
eine Drehplattform (608) innerhalb des Waschbeckens (604), gestaltet zum Aufnehmen des optischen Gegenstands (200); und
mindestens eine Waschdüse (614), gestaltet zum Reinigen mindestens einer Oberfläche des optischen Gegenstands (200) mit einer druckbeaufschlagten Flüssigkeit.

11. Beschichtungssystem (100) nach Anspruch 10, wobei das Waschbecken (604) einen Lufteinlass (618), der zum Leiten von Luft zu der Drehplattform (608) gestaltet ist, einen Luftauslass (620), der zum Ablassen der Luft aus dem Waschbecken (604) gestaltet ist, und einen Diffusor (622) zwischen dem Lufteinlass (618) und dem Luftauslass (620) umfasst.

12. Beschichtungssystem (100) nach einem der Ansprüche 1 bis 11, ferner umfassend mindestens eine Härtungsstation (401), wobei jede Härtungsstation (401) unabhängig dafür gestaltet ist, das mindestens eine Beschichtungsmaterial, das auf den optischen Gegenstand (200) aufgebracht ist, mindestens teilweise zu härten.

13. Beschichtungssystem (100) nach Anspruch 12, wobei jede Härtungsstation (401) unabhängig mindestens eines von (i) einer thermischen Härtungsstation; (ii) einer UV-Härtungsstation; (iii) einer IR-Härtungsstation; oder (iv) Kombinationen von mindestens zwei von (i), (ii) und (iii) umfasst.

14. Beschichtungssystem nach einem der Ansprüche 1 bis 13, ferner umfassend einen Filter (1056) in Fluidverbindung mit der Rezirkulationsschleife (1026), wobei der Filter (1056) zum Filtern des Beschichtungsmaterials, das durch die Rezirkulationsschleife (1026) zirkuliert, gestaltet ist.

15. Beschichtungssystem nach einem der Ansprüche 1 bis 14, ferner umfassend ein Blasenentfernungssystem (1058) in Fluidverbindung mit der Rezirkulationsschleife (1026), wobei das Blasenentfernungssystem (1058) zum Entfernen von Luftblasen in dem Beschichtungsmaterial gestaltet ist, das durch die Rezirkulationsschleife (1026) zirkuliert.

## Revendications

1. Système de revêtement (100) pour revêtir un article optique (200), le système de revêtement (100) comprenant :
au moins une cartouche remplaçable (1002) comprenant un réservoir (1016) configuré pour contenir un volume d'un matériau de revêtement ; et
au moins un appareil de revêtement (300) pouvant être utilisé pour revêtir au moins une partie de l'article optique (200) avec une quantité sélectionnée du matériau de revêtement provenant d'au moins une cartouche remplaçable (1002) en prise,
**caractérisé en ce que** l'au moins une cartouche remplaçable (1002) comprend en outre une boucle de recirculation (1026) en communication fluidique avec le réservoir (1016), et une première pompe (1028) et une seconde pompe (1070) en communication fluidique avec la boucle de recirculation (1026), et
la seconde pompe (1070) de chacune de l'au moins une cartouche remplaçable (1002) en prise pouvant être utilisée pour aspirer la quantité sélectionnée du matériau de revêtement à partir de la boucle de recirculation (1026) et distribuer la quantité sélectionnée du matériau de revêtement à l'au moins un appareil de revêtement (300).

2. Système de revêtement (100) selon la revendication 1, la première pompe (1028) étant une pompe à diaphragme configurée pour faire recirculer le matériau de revêtement provenant du réservoir (1016) à travers la boucle de recirculation (1026).

3. Système de revêtement (100) selon la revendication 1 ou la revendication 2, la seconde pompe (1070) étant une pompe à piston comprenant un piston (1084) disposé à l'intérieur d'une chambre de pompage (1082) et configuré pour un mouvement de va et vient à l'intérieur de la chambre de pompage (1082) par l'intermédiaire d'un élément d'entraînement (1086).

4. Système de revêtement (100) selon l'une quelconque des revendications 1 à 3, l'au moins un appareil de revêtement (300) comprenant un premier appareil de revêtement (300a) et un second appareil de revêtement (300b), chacun pouvant être utilisé sélectivement pour revêtir au moins une partie de l'article optique (200) avec la quantité sélectionnée du matériau de revêtement provenant de l'au moins un réservoir de revêtement (1016) en prise.

5. Système de revêtement (100) selon la revendication 4, le premier appareil de revêtement (300a) comprenant une buse de décharge ultrasonore (302) configurée pour pulvériser la quantité sélectionnée de matériau de revêtement à partir de l'au moins un réservoir de revêtement en prise (1016).

6. Système de revêtement (100) selon la revendication 4 ou la revendication 5, le second appareil de revêtement (300b) étant un appareil de revêtement par centrifugation.

7. Système de revêtement (100) selon l'une quelconque des revendications 1 à 6, comprenant en outre un appareil de marquage (700) configuré pour marquer au moins une surface de l'article optique (200) avec au moins une marque (210) ; et un appareil d'identification (800) configuré pour identifier l'au moins une marque (210), l'au moins une marque (210) contenant des informations pour traiter l'article optique (200) dans le système de revêtement (100).

8. Système de revêtement (100) selon la revendication 7, comprenant en outre un bras de placement (900) configuré pour déplacer l'article optique (200) de l'appareil d'identification (800) vers l'au moins un appareil de revêtement (300) et positionner l'article optique (200) selon une orientation prédéterminée par rapport à au moins un appareil de revêtement (300) sur la base de l'orientation de l'au moins une marque (210).

9. Système de revêtement (100) selon l'une quelconque des revendications 1 à 8, comprenant en outre un poste de pré-traitement (500), le poste de pré-traitement (500) étant configuré pour augmenter la mouillabilité de l'article optique (200) afin de favoriser l'adhérence de l'au moins un matériau de revêtement avec l'article optique (200).

10. Système de revêtement (100) selon l'une quelconque des revendications 1 à 9, comprenant en outre un poste de nettoyage (600) comprenant :
un logement (602) ayant une cuvette de lavage (604) et un couvercle (606) pour enfermer la cuvette de lavage (604) ;
une plate-forme de centrifugation (608) à l'intérieur de la cuvette de lavage (604) configurée pour recevoir l'article optique (200) ; et
au moins une buse de lavage (614) configurée pour nettoyer au moins une surface de l'article optique (200) avec un liquide sous pression.

11. Système de revêtement (100) selon la revendication 10, la cuvette de lavage (604) comprenant une entrée d'air (618) configurée pour diriger l'air vers la plate-forme de centrifugation (608), une sortie d'air (620) configurée pour évacuer l'air de la cuvette de lavage (604), et un diffuseur (622) entre l'entrée d'air (618) et la sortie d'air (620).

12. Système de revêtement (100) selon l'une quelconque des revendications 1 à 11, comprenant en outre au moins un poste de durcissement (401), chaque poste de durcissement (401) étant configuré indépendamment pour durcir au moins partiellement l'au moins un matériau de revêtement appliqué à l'article optique (200).

13. Système de revêtement (100) selon la revendication 12, chaque poste de durcissement (401) comprenant indépendamment au moins l'un de (i) un poste de durcissement thermique ; (ii) un poste de durcissement UV ; (iii) un poste de durcissement IR ; ou (iv) des combinaisons d'au moins deux de (i), (ii) et (iii).

14. Système de revêtement selon l'une quelconque des revendications 1 à 13, comprenant en outre un filtre (1056) en communication fluidique avec la boucle de recirculation (1026), le filtre (1056) étant configuré pour filtrer le matériau de revêtement circulant à travers la boucle de recirculation (1026).

15. Système de revêtement selon l'une quelconque des revendications 1 à 14, comprenant en outre un système d'élimination des bulles d'air (1058) en communication fluidique avec la boucle de recirculation (1026), le système d'élimination des bulles d'air (1058) étant configuré pour éliminer les bulles d'air dans le matériau de revêtement circulant à travers la boucle de recirculation (1026).
